# EUROPEAN PATENT SPECIFICATION

(11) **EP 4 006 306 B1**
(45) Date of publication and mention of the grant of the patent: **15.05.2024**
(21) Application number: 20210265.3
(22) Date of filing: 27.11.2020
(51) Int. Cl.: F01D 9/02, F01D 25/12

(54) **TRANSITION DUCT FOR A GAS TURBINE CAN COMBUSTOR**
ÜBERLEITKANAL FÜR EINE BRENNKAMMER EINER GASTURBINE
CONDUIT DE TRANSITION POUR UNE CHAMBRE DE COMBUSTION DE TURBINE À GAZ

(43) Date of publication of application: 01.06.2022
(73) Proprietor: Ansaldo Energia Switzerland AG, 5400 Baden (CH)
(72) Inventor: THORPE, Steven, 5400 Baden (CH); MENG, Patrik, 5400 Baden (CH)
(74) Representative: Studio Torta S.p.A.

(56) References cited:
- EP-A2- 1 783 350
- EP-A2- 2 206 886
- EP-B1- 1 783 350
- EP-B1- 2 206 886
- WO-A1-2015/117137
- WO-A1-2017/023328
- WO-A1-2018/144064
- US-A1- 2010 316 492
- US-A1- 2012 121 381
- US-A1- 2014 283 520

## Description

### Field of the Invention

The technical field of the present invention relates to the field of the gas turbine assemblies for power plants. In particular, the present invention refers to the transition duct of a gas turbine can combustor wherein, as known by the skilled person in this technical field, the term "transition duct" refers to the downstream component of a can combustor configured for guiding the hot gas toward the turbine assembly arranged downstream of the can combustors. In this technical field, the present invention relates to the technical problem of how to improve the cooling of the above transition duct in order to allow an increased hot gas temperature. Moreover, the present invention refers to a can combustor provided with the above mentioned transition duct and to a gas turbine for power plants comprising a plurality of such can combustors.

### Description of prior art

As known, a gas turbine assembly for power plants (in the following only gas turbine) is an assembly comprising a rotor provided with an upstream compressor, a combustor assembly and at least a downstream turbine. The terms "downstream" and "upstream" refer to the direction of the main gas flow passing through the gas turbine. In particular, the compressor comprises an inlet supplied with air and a plurality of blades compressing the passing air. The compressed air leaving the compressor flows into a plenum, i.e. an enclosed volume, and from there into the combustor assembly. Inside the combustor assembly the compressed air is mixed with at least one fuel. The mixture of fuel and compressed air is combusted and the resulting hot gas leaves the combustor assembly and is expanded in the turbine performing work on the rotor.

According to a particular kind of gas turbine called a can combustor gas turbine, the combustor assembly is realized in the form of a plurality of can combustors annularly or circumferentially arranged as a ring around the turbine axis and are supported by an outer casing defining the plenum. Each can-combustor is provided with at least a burner, at least a combustion chamber and a transition duct made of a metallic material (for instance high-temperature metal alloy) for guiding the hot gas toward the turbine. As already mentioned in the previous chapter, the transition duct is the downstream component of a can combustor (also called "liner") and it is realized in the form of a tubular body having an upstream end substantially with a circular cross-section connected to the outlet of the combustion chamber and a downstream end with a substantially rectangular or square cross-section connected to the inlet of the turbine. This downstream end of the transition duct is also called the "picture frame".

As the foregoing described, the transition duct is a component configured for guiding the hot gas flow from the combustion chamber outlet to the turbine inlet and is thus exposed to an extremely high flow temperature. Indeed, for example, the temperature of the hot gas may reach 1800 K or more. As is the case for other components of gas turbine engines, in view of this high hot gas temperature the transition duct requires cooling in order to avoid damage caused by overheating and to increase the service lifetime. For this purpose of cooling, the transition duct comprises a hot shell, in the form of an inner tubular body having the inner surface in contact with the hot gas, and a cold shell in the form of an outer tubular body arranged around the inner tubular body and having the outer surface in contact with the compressed air in the plenum. The space between the inner tubular body and the outer tubular body defines a cooling channel for cooling air taken from the plenum, i.e. the compressed air delivered by the compressor. For this purpose, the outer tubular body is provided with a plurality of cooling air inlets, for example impingement cooling holes, realizing cooling airflows which may be directed substantially perpendicularly to the outer surface of the inner tubular body.

According to the prior art common practice, the inner tubular body, in particular the outer surface of the inner tubular body facing the cooling channel, is realized in form of a smooth surface having a thickness configured to resist the pressure loads generated within the combustor.

For improving the cooling performance, it is desirable to lower the wall thickness of the inner tubular body. However, this thickness reduction may adversely affect the structural strength of this component.

Therefore, today there is the need to optimize the design of the transition duct, i.e. minimizing the wall thickness of the inner tubular body, in order to improve the cooling effect without affecting the structural strength of this component. Indeed improved cooling performance allows the hot gas temperature to be increased and thus the efficiency and output of the gas turbine assembly to be increased.

US2014283520 discloses a gas turbine comprising a transition duct, a flow sleeve, a cavity 142 in between. According to US2014283520, a rib is provided acting as a bridge for connecting the transition duct to the sleeve in order to divide the cavity in two sub cavities.

US2012121381 discloses transition duct that is formed at least in part from a multi-panel outer wall. According to US2012121381, the multi-panel outer wall is formed from an inner panel having an inner surface that defines at least a portion of a hot gas path plenum and an intermediate panel positioned radially outward from the inner panel such that at least one cooling chamber is formed between the inner and intermediate panels. The intermediate and outer panels of US2012121381 are supported by one or more ribs extending from the inner panel radially outward into contact the intermediate panel.

### Disclosure of the invention

Accordingly, a primary object of the present invention is to provide a transition duct for a gas turbine can combustor suitable for overcoming the drawbacks of the prior art practice. In particular, the scope of the present invention is to provide a transition duct for a gas turbine can combustor having a design allowing a higher firing temperature and a longer service lifetime in terms of a greater structural resistance due to an improved cooling feature.

In order to achieve the objective mentioned above, the present invention provides a transition duct for a can combustor of a gas turbine assembly for a power plant wherein the transition duct, as known, is realized in the form of a tubular assembly comprising a first end (preferably having a circular cross section) configured for being coupled to a combustion chamber of the can combustor and a second end (preferably having a rectangular or square cross section) configured for being coupled/facing a turbine of the gas turbine assembly. In this configuration, the transition duct comprises:
- an inner tubular body (or hot shell) having an inner surface in contact with the hot gas leaving the combustion chamber and an outer surface, and
- an outer tubular body (or cold shell) having an inner surface facing the outer surface of the inner tubular body and an outer surface in contact with cooling air flowing in a plenum of the gas turbine assembly, i.e. a closed volume between the compressor outlet and the can combustor inlet.

As known, for cooling purpose a gap is present between the inner tubular body and the outer tubular body forming a cooling channel defined by the outer surface of the inner tubular body and the inner surface of the outer tubular body. The outer tubular body is provided with a plurality of air inlets (for example, impingement cooling holes) allowing part of the cooling air to enter the cooling channel from the plenum.

According to the invention, the outer surface of the inner tubular body is not a smooth or a plate-like surface as according the prior art but is provided with a plurality of ribs. These ribs improve the structural strength and provide a better distribution of the structural strength of this component. In fact, according to the invention the transition duct may have a structural strength that varies with position depending on the presence of the ribs so that this component may be locally stiffer or weaker as required. This variable structural strength helps to balance the stress distribution in the transition duct allowing better cyclic and creep life performance. Thus, it is possible to lower the thickness of the inner tubular body, and consequently to improve the cooling of this component, without affecting the safe structural strength. A higher cooling efficiency of the inner tubular body allows to raise the hot gas temperature of the gas turbine and therefore to raise the efficiency and power output of the gas turbine assembly.

According to the invention, a first plurality of ribs are provided wherein these ribs are parallel to each other and extending on the outer surface of the inner tubular body along a first direction, preferably the axial direction, i.e. a direction parallel to the main hot gas flow.

According to the invention, a second plurality of ribs are provided wherein these ribs are parallel to each other and extending on the outer surface of the inner tubular body along a second direction, preferably orthogonal to the first direction above mentioned.

As cited, the first plurality of ribs allows to define a plurality of parallel channels (preferably axial channels) in the gap between the inner and outer tubular body. In this case, preferably the holes obtained in the outer tubular body are arranged in a plurality of parallel rows facing these parallel channels.

The ribs of the first plurality of ribs (preferably axial ribs) have a height greater than the ribs of the second plurality of ribs.

For instance, the ribs are configured for forming a matrix pattern or a plurality of hexagons - a hexagon pattern or a plurality of diamonds - a diamond pattern on the outer surface of the inner tubular body.

Preferably, the transition duct, at least the inner tubular body, is produced by an additive manufacturing technology, for instance SLM (selective laser melting).

The present invention is also directed to a can combustor for a gas turbine assembly for a power plant. This can combustor comprises at least a burner, at least a combustion chamber and a transition duct as claimed for guiding the hot gas from the combustion chamber toward a turbine of the gas turbine assembly. However, in general, the invention is applicable to any gas turbine with a transition duct, i.e. single-stage, two-stage, and axially staged combustors.

Preferably, the can combustor is configured for involving two combustions stages. In this case, the can combustor comprises in series a first burner, a combustion chamber, a second burner, a second combustion chamber and the claimed transition duct.

The present invention is also directed to a gas turbine assembly for a power plant. This gas turbine has an axis and comprises:
- a compressor for compressing air,
- a plenum for receiving compressed air leaving the compressor,
- a plurality of can combustors for mixing and combusting with at least a fuel the compressed air leaving the plenum,
- a turbine for expanding the combusted hot gas flow leaving the can combustors and performing work on a rotor;
wherein each can combustor comprises a claimed transition duct.

It is to be understood that both the foregoing general description and the following detailed description are exemplary, and are intended to provide further explanation of the invention as claimed. Other advantages and features of the invention will be apparent from the following description, drawings and claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of an example of a gas turbine suitable to be provided with the present invention;
- figure 2 is a schematic view of the portion labelled as II in figure 1;
- figure 3 is a schematic view of an embodiment of a transition duct;
- figure 4 is a sectional view of a portion of the transition duct of figure 3;
- figures 5 and 6 are enlarged views of the portion labelled as II in figure 4 wherein figure 5 is a schematization of the prior art and figure 6 is an embodiment of the present invention;
- figure 7 is perspective view of a portion of a transition duct according to the invention;
- figure 8 is a schematic view of a transition duct according to the invention;
- figures 9 and 10 are schematic views of different ways to embody the invention.

### Detailed description of preferred embodiments of the invention

In association with the attached drawings, the technical contents and detailed description of the present invention are described thereinafter according to the preferred embodiments, being not used to limit its executing scope. Any equivalent variation and modification made according to appended claims is all covered by the claims claimed by the present invention.

Reference will now be made to the drawing figures to describe the present invention in detail.

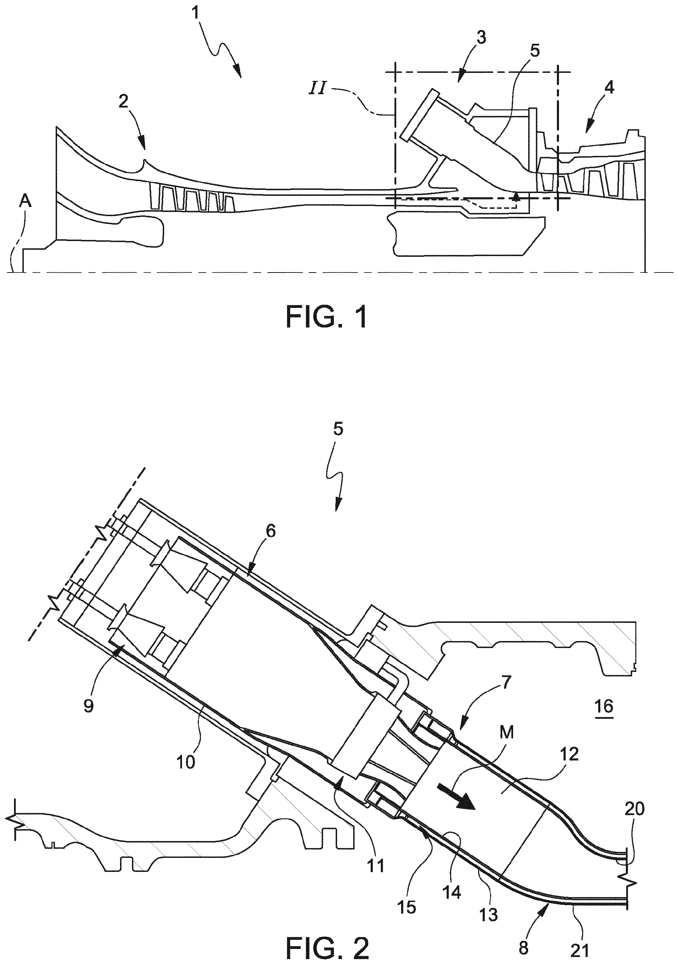

Reference is made to figure 1 which is a side elevation view, cut along an axial longitudinal plane, of a gas turbine assembly that can be provided with a plurality of transition ducts according to the present invention. In particular, figure 1 discloses a simplified view of a gas turbine assembly, designated as a whole with reference 1. The gas turbine assembly 1 comprises a compressor 2, a combustor assembly 3 and a turbine 4. The compressor 2 and the turbine 4 extend along a main axis A. The combustor assembly 3 disclosed in the example of figure 1 is a can combustor assembly comprising a plurality of can combustors 5 arranged as a ring around the axis A. Each can combustor 5 may be configured for generating a double or sequentially staged combustion or a single-stage combustion. The compressor 2 of the gas turbine engine 1 provides a compressed airflow, which is mixed with fuel and burned in each can combustor 5. Part of the airflow delivered by the compressor 2 is split from the main flow and supplied to the combustor assembly 3 and to the turbine section 4 for the purpose of cooling. Reference is now made to figure 2 that is an enlarged view of the portion labelled with the reference II in figure 1. In particular, figure 2 discloses an example of a can combustor 5 that can be provided with a transition duct according to the invention. This can combustor 5 disclosed in figure 2 involves two combustion stages. In fact the can combustor 5 disclosed in figure 2 comprises a first-stage combustor 6, a second-stage combustor 7 and a transition duct 8, sequentially arranged and defining a hot gas path. More specifically, the first-stage combustor 6 comprises a first-stage burner unit 9 and a first-stage combustion chamber 10. The second-stage combustor 7 is arranged downstream of the first-stage combustor 6 and comprises a second-stage burner unit 11 and a second-stage combustion chamber 12. The second-stage combustor 7 is furthermore coupled to the turbine 4, here not shown, through the transition duct 8. The second-stage combustion chamber 12 extends along an axial direction M parallel to the hot gas main flow M. In this embodiment, the second-stage combustion chamber 12 comprises an outer liner 13 and an inner liner 14 wherein the outer liner 13 surrounds the inner liner 14 at a distance therefrom, so that a convective cooling channel 15 is defined between the outer liner 13 and the inner liner 14.

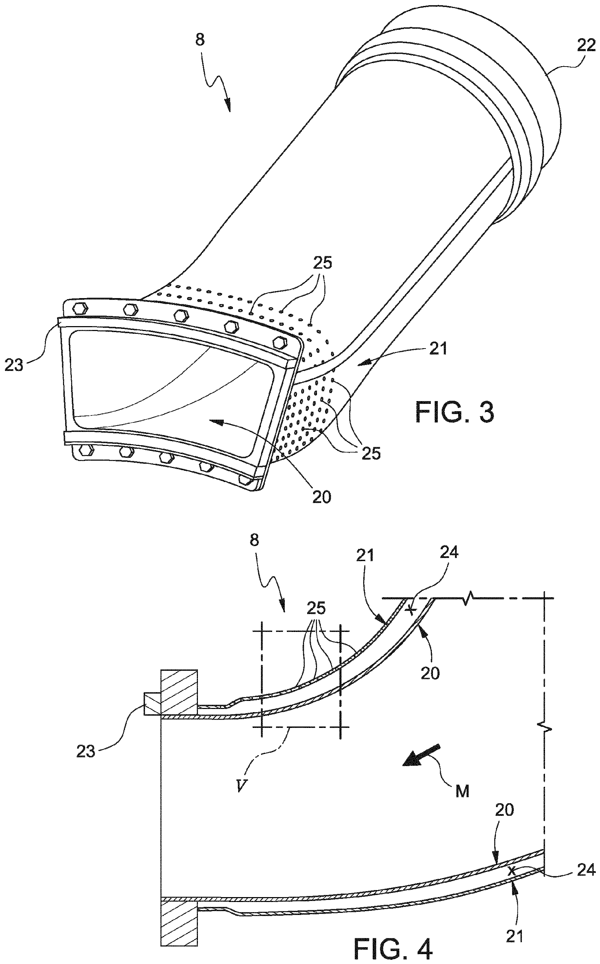

Figure 3 is a schematic view of an embodiment of a transition duct. As disclosed in figure 3, the transition duct 8 is realized in form of a tubular assembly having a first end 22 having a circular cross-section coupled to the second combustion chamber and a second end 23 (the hot-gas flow exit or also called picture frame) having a square cross-section facing the turbine assembly. As known, the transition duct 8 is configured for guiding the hot gas flow M toward the turbine. As disclosed, the tubular assembly of the transition duct 8 comprises a an inner tubular body 20 (called hot shell because its inner surface 18 is in direct contact with the hot gas flow M) covered by an outer tubular body 21 (called cold shell because its outer surface 17 is in direct contact with the compressed air or cooling air circulating in the plenum 16). As disclosed in figure 4, a gap is present between the inner tubular body 20 and the outer tubular body 21 forming a cooling channel 24 defined by outer surface of the inner tubular body 20 and the inner surface of the outer tubular body 21 and wherein part of the compressed air may enter for cooling the inner tubular body 20. For allowing the air to enter in the cooling channel 24, the outer tubular body 21 is provided with a plurality of impingement holes 25, or other flow entrance devices, because the air orthogonally impacts the outer surface of the inner tubular body 20. In the embodiment of figure 3 and 4 the holes are realized only in a downstream portion of the outer tubular body 21. However, additional holes may be provided also in other upstream portions of the outer tubular body 21, i.e. a portion towards the end 22.

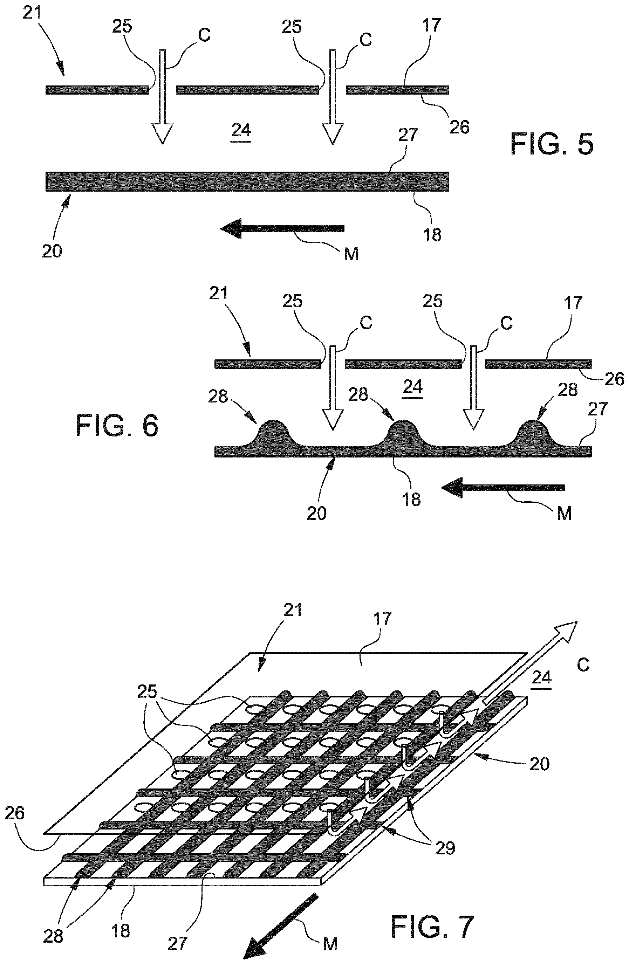

Figures 5 and 6 are enlarged views of the portion labelled as V in figure 4 wherein the figure 5 is a schematization of the prior art and figure 6 is an embodiment of the present invention. The reference C refers to the cooling air. According to the prior art represented in figure 5, the inner tubular body 20, in particular the outer surface 27 facing the cooling channel 24, is realized in the form of a flat surface having a thickness configured for resisting to the pressure loads generated inside the combustor. For cooling reasons, it is desirable to lower the wall thickness of the inner tubular body 20. However, the thickness reduction of a flat surface affects the structural strength of this component. Figure 6 is an embodiment of the invention that allows the reduction of the thickness of the inner tubular body 20 in order to improve the cooling effect without affecting the structural strength of the component. For achieving this result, according to the invention the outer surface 27 of the inner tubular body 20, i.e. the surface 27 facing the cooling channel 24, is provided with a plurality of ribs 28. These ribs 28 improve the structural strength of this component. Thus, it is possible to reduce the thickness while improving the cooling effect without any problem in terms of ensuring a safe structural strength. As an example, according to Applicant tests, a constant wall thickness of about 5mm may be lowered to 2-3mm. Moreover, the invention allows the use an additive manufacturing technology (for instance SLM) for producing this component.

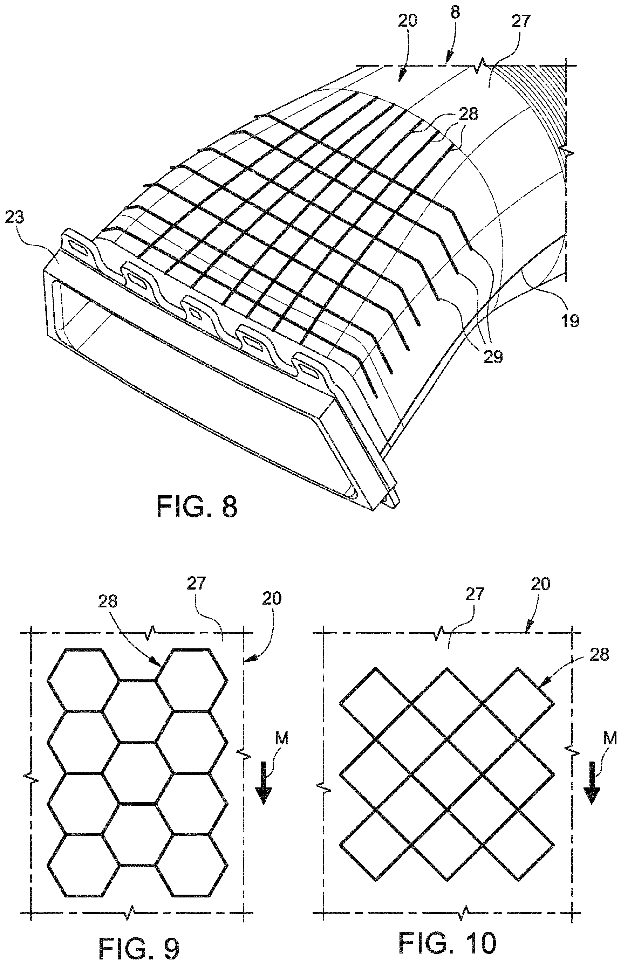

Figure 7 is a perspective view of a portion of a transition duct according to the invention wherein the outer surface 27 of the inner tubular body 20 is provided with a plurality of axial ribs 28 (i.e. ribs parallel to the hot gas flow M) and a plurality of circumferential ribs 29 (i.e. ribs orthogonal to the axial ribs 28). In this example, the axial ribs 28 disclose a greater height with respect to the circumferential ribs 29 so that the cooling air C is substantially guided along a plurality of axial channels. As disclosed in figure 8, the embodiment of figure 7 allows to realize a matrix pattern on the outer surface 27 of the inner tubular body 20. In particular, according the embodiment of figure 8 the inner tubular body 20 is realized in the form of two shells, i.e. an outer shell and an inner shell (not disclosed in figure 8) connected by axial weld lines 19. In this example, the ribs are provided only in the outer surface of the outer shell.

Figures 9 and 10 are schematic views of different ways to embody the invention wherein the ribs are configured for realizing different patterns on the outer surface 27 of the inner tubular body 20. For instance, in figure 9 the ribs form a hexagon pattern whereas in figure 10 the ribs form a diamond pattern on the outer surface 27 of the inner tubular body 20.

Although the invention has been explained in relation to its preferred embodiment(s) as mentioned above, it is to be understood that many other possible modifications and variations can be made without departing from the scope of the present invention as defined by the appended claims.

## Claims

1. A transition duct (8) for a can combustor (5) of a gas turbine assembly (1) for power plant; the transition duct (8) being a tubular assembly comprising a first end (22) configured for being coupled to a combustion chamber of the can combustor (5) and a second end configured for being coupled to a turbine (4) of the gas turbine assembly (1); the transition duct (8) comprising:
- an inner tubular body (20) having an inner surface (18) in contact with the hot gas (M) and an outer surface (27);
- an outer tubular body (21) having an inner surface (26) and an outer (17) surface in contact with cooling air (C);
wherein a gap is present between the inner tubular body (20) and the outer tubular body (21) forming a cooling channel (24) defined by the outer surface (27) of the inner tubular body (20) and the inner surface (26) of the outer tubular body (21);
wherein the outer tubular body (21) is provided with a plurality of holes (25) allowing cooling air (C) to enter the cooling channel (24);
wherein the outer surface (27) of the inner tubular body (20) is provided with a plurality of ribs (28);
wherein a first plurality of ribs (28) is provided, these ribs being parallel to each other and extending on the outer surface (27) of the inner tubular body (20) along a first direction;
wherein a second plurality of ribs (29) is provided, these being parallel to each other and extending on the outer surface (27) of the inner tubular body (20) along a second direction;
wherein the ribs of the first plurality of ribs (28) have a height greater than the ribs of the second plurality of ribs (29) .

2. The transition duct as claimed in claim 1, wherein the ribs of the first plurality of ribs (28) are axial ribs parallel to the hot gas direction (M) forming a plurality of axial channels in the cooling channel (24).

3. The transition duct as claimed in claim 2, wherein the holes (25) of the outer tubular body (21) are arranged in a plurality of axial rows facing the axial channels.

4. The transition duct as claimed in any one of the foregoing claims from 1 to 3, wherein the ribs of the second plurality of ribs (29) are orthogonal to the ribs of the first plurality of ribs (28).

5. The transition duct as claimed in any one of the foregoing claims from 1 to 4, wherein the ribs are configured for forming a matrix pattern on the outer surface (27) of the inner tubular body (20).

6. The transition duct as claimed in any one of the foregoing claims from 1 to 4, wherein the ribs are configured for forming a plurality of hexagons - a hexagon pattern on the outer surface (27) of the inner tubular body (20).

7. The transition duct as claimed in any one of the foregoing claims from 1 to 4, wherein the ribs are configured for forming a plurality of diamonds- a diamond pattern on the outer surface (27) of the inner tubular body (20).

8. The transition duct as claimed in any one of the foregoing claims, wherein the inner tubular body (20) is realized in form of an outer shell and an inner shell; at least the outer shell being provided with the ribs (28, 29).

9. The transition duct as claimed in any one of the foregoing claims, wherein the transition duct (8) is produced by an additive manufacturing technology.

10. A can combustor (5) for a gas turbine assembly (1) for power plant, wherein the can combustor (5) comprises at least a burner (9, 11), at least a combustion chamber (10, 12) and a transition duct (8) for guiding the hot gas from the combustion chamber (10, 12) toward a turbine (3) of the gas turbine assembly (1); wherein the transition duct (8) is realized according to any one of the foregoing claims.

11. The can combustor as claimed in claim 10, wherein the can combustor (5) comprises in series a first a burner (9) a combustion chamber (10) a second burner (11), a second combustion chamber (12), the transition duct (8) being connected to the second combustion chamber (12).

12. Gas turbine for power plant; the gas turbine (1) having an axis (A) and comprising:
- a compressor (2) for compressing ambient air,
- a plenum (16) for receiving compressed air leaving the compressor (2),
- a plurality of can combustors (5) for mixing and combusting the compressed air leaving the plenum (16) with at least a fuel,
- a turbine (3) for expanding the combusted hot gas flow leaving the can combustors (5) and performing work on a rotor;
wherein each can combustor (5) realized according to any one of the foregoing claims 10 or 11.

## Patentansprüche

1. Übergangskanal (8) für einen Dosenbrenner (5) einer Gasturbinenanordnung (1) für ein Kraftwerk; wobei der Übergangskanal (8) eine rohrförmige Anordnung ist, die ein erstes Ende (22), das dazu konfiguriert ist, mit einer Brennkammer des Dosenbrenners (5) gekoppelt zu werden, und ein zweites Ende umfasst, das dazu konfiguriert ist, mit einer Turbine (4) der Gasturbinenanordnung (1) gekoppelt zu werden, wobei der Übergangskanal (8) umfasst
- einen inneren rohrförmigen Körper (20), der eine Innenfläche (18) in Kontakt mit Heißgas (M) und eine Außenfläche (27) aufweist;
- einen äußeren rohrförmigen Körper (21), der eine Innenfläche (26) und eine Außenfläche (17) in Kontakt mit Kühlungsluft (C) aufweist;
wobei zwischen dem inneren rohrförmigen Körper (20) und dem äußeren rohrförmigen Körper (21) ein Spalt vorhanden ist, der einen Kühlkanal (24) bildet, der durch die Außenfläche (27) des inneren rohrförmigen Körpers (20) und die Innenfläche (26) des äußeren rohrförmigen Körpers (21) definiert ist;
wobei der äußere röhrenförmige Körper (21) mit einer Vielzahl von Löchern (25) versehen ist, die den Eintritt von Kühlungsluft (C) in den Kühlkanal (24) ermöglichen;
wobei die Außenfläche (27) des inneren rohrförmigen Körpers (20) mit einer Vielzahl von Rippen (28) versehen ist;
wobei eine erste Vielzahl von Rippen (28) vorgesehen ist, die parallel zueinander sind und sich auf der Außenfläche (27) des inneren rohrförmigen Körpers (20) entlang einer ersten Richtung erstrecken;
wobei eine zweite Vielzahl von Rippen (29) vorgesehen ist, die parallel zueinander sind und sich auf der Außenfläche (27) des inneren rohrförmigen Körpers (20) entlang einer zweiten Richtung erstrecken;
wobei die Rippen der ersten Vielzahl von Rippen (28) eine größere Höhe aufweisen als die Rippen der zweiten Vielzahl von Rippen (29).

2. Übergangskanal nach Anspruch 1, wobei die Rippen der ersten Vielzahl von Rippen (28) axiale Rippen sind, die parallel zur Heißgasrichtung (M) verlaufen und eine Vielzahl von axialen Kanälen im Kühlkanal (24) bilden.

3. Übergangskanal nach Anspruch 2, wobei die Löcher (25) des äußeren rohrförmigen Körpers (21) in einer Vielzahl von axialen Reihen angeordnet sind, die den axialen Kanälen zugewandt sind.

4. Übergangskanal nach einem der vorangehenden Ansprüche 1 bis 3, wobei die Rippen der zweiten Vielzahl von Rippen (29) orthogonal zu den Rippen der ersten Vielzahl von Rippen (28) sind.

5. Übergangskanal nach einem der vorangehenden Ansprüche 1 bis 4, wobei die Rippen dazu konfiguriert sind, ein Matrixmuster auf der Außenfläche (27) des inneren rohrförmigen Körpers (20) zu bilden.

6. Übergangskanal nach einem der vorangehenden Ansprüche 1 bis 4, wobei die Rippen so konfiguriert sind, dass sie eine Vielzahl von Sechsecken - ein Sechseckmuster - auf der Außenfläche (27) des inneren rohrförmigen Körpers (20) bilden.

7. Übergangskanal nach einem der vorangehenden Ansprüche 1 bis 4, wobei die Rippen so konfiguriert sind, dass sie eine Vielzahl von Rauten - ein Rautenmuster - auf der Außenfläche (27) des inneren rohrförmigen Körpers (20) bilden.

8. Übergangskanal nach einem der vorangehenden Ansprüche, wobei der innere rohrförmige Körper (20) in Form einer äußeren Schale und einer inneren Schale verwirklicht ist; wobei wenigstens die äußere Schale mit den Rippen (28, 29) versehen ist.

9. Übergangskanal nach einem der vorangehenden Ansprüche, wobei der Übergangskanal (8) durch eine additive Fertigungstechnik hergestellt ist.

10. Dosenbrenner (5) für eine Gasturbinenanordnung (1) für ein Kraftwerk, wobei der Dosenbrenner (5) wenigstens einen Brenner (9, 11), wenigstens eine Brennkammer (10, 12) und einen Übergangskanal (8) zum Führen von Heißgas von der Brennkammer (10, 12) in Richtung zu einer Turbine (3) der Gasturbinenanordnung (1) umfasst, wobei der Übergangskanal (8) nach einem der vorangehenden Ansprüche verwirklicht ist.

11. Dosenbrenner nach Anspruch 10, wobei der Dosenbrenner (5) in Serie einen ersten Brenner (9), eine Brennkammer (10), einen zweiten Brenner (11), eine zweite Brennkammer (12) umfasst, wobei der Übergangskanal (8) mit der zweiten Brennkammer (12) verbunden ist.

12. Gasturbine für ein Kraftwerk; wobei die Gasturbine (1) eine Achse (A) aufweist und umfasst:
- einen Verdichter (2) zum Verdichten von Umgebungsluft,
- eine Sammelkammer (16) zum Aufnehmen der komprimierten Luft, die aus dem Verdichter (2) austritt,
- eine Vielzahl von Dosenbrennern (5) zum Mischen und Verbrennen der aus der Sammelkammer (16) austretenden komprimierten Luft mit wenigstens einem Brennstoff,
- eine Turbine (3) zum Entspannen des aus den Dosenbrennern (5) austretenden verbrannten Heißgasstroms und zum Verrichten von Arbeit an einem Rotor;
wobei jeder Dosenbrenner (5) nach einem der vorangehenden Ansprüche 10 oder 11 verwirklicht ist.

## Revendications

1. Conduit de transition (8) pour une chambre de combustion tubulaire (5) d'un ensemble turbine à gaz (1) pour centrale électrique ; le conduit de transition (8) étant un ensemble tubulaire comprenant une première extrémité (22) configurée pour être couplée à une chambre de combustion de la chambre de combustion tubulaire (5) et une seconde extrémité configurée pour être couplée à une turbine (4) de l'ensemble turbine à gaz (1) ; le conduit de transition (8) comprenant :
- un corps tubulaire interne (20) ayant une surface interne (18) en contact avec les gaz chauds (M) et une surface externe (27) ;
- un corps tubulaire externe (21) ayant une surface interne (26) et une surface externe (17) en contact avec l'air de refroidissement (C) ; dans lequel un espace est présent entre le corps tubulaire interne (20) et le corps tubulaire externe (21) formant un canal de refroidissement (24) défini par la surface externe (27) du corps tubulaire interne (20) et la surface interne (26) du corps tubulaire externe (21) ;
dans lequel le corps tubulaire externe (21) est pourvu d'une pluralité de trous (25) permettant à l'air de refroidissement (C) de pénétrer dans le canal de refroidissement (24) ;
dans lequel la surface externe (27) du corps tubulaire interne (20) est pourvue d'une pluralité de nervures (28) ;
dans lequel une première pluralité de nervures (28) est prévue, ces nervures étant parallèles les unes aux autres et s'étendant sur la surface externe (27) du corps tubulaire interne (20) le long d'une première direction ;
dans lequel une seconde pluralité de nervures (29) est prévue, celles-ci étant parallèles les unes aux autres et s'étendant sur la surface externe (27) du corps tubulaire interne (20) le long d'une seconde direction ;
dans lequel les nervures de la première pluralité de nervures (28) ont une hauteur supérieure aux nervures de la seconde pluralité de nervures (29).

2. Conduit de transition selon la revendication 1, dans lequel les nervures de la première pluralité de nervures (28) sont des nervures axiales parallèles à la direction des gaz chauds (M) formant une pluralité de canaux axiaux dans le canal de refroidissement (24).

3. Conduit de transition selon la revendication 2, dans lequel les trous (25) du corps tubulaire externe (21) sont agencés en une pluralité de rangées axiales faisant face aux canaux axiaux.

4. Conduit de transition selon l'une quelconque des revendications 1 à 3 précédentes, dans lequel les nervures de la seconde pluralité de nervures (29) sont orthogonales aux nervures de la première pluralité de nervures (28).

5. Conduit de transition selon l'une quelconque des revendications 1 à 4 précédentes, dans lequel les nervures sont configurées pour former un motif matriciel sur la surface externe (27) du corps tubulaire interne (20).

6. Conduit de transition selon l'une quelconque des revendications 1 à 4 précédentes, dans lequel les nervures sont configurées pour former une pluralité d'hexagones, un motif d'hexagone sur la surface externe (27) du corps tubulaire interne (20).

7. Conduit de transition selon l'une quelconque des revendications 1 à 4 précédentes, dans lequel les nervures sont configurées pour former une pluralité de losanges, un motif de losange sur la surface externe (27) du corps tubulaire interne (20).

8. Conduit de transition selon l'une quelconque des revendications précédentes, dans lequel le corps tubulaire interne (20) est réalisé sous la forme d'une coque externe et d'une coque interne, la coque externe au moins étant pourvue de nervures (28, 29).

9. Conduit de transition selon l'une quelconque des revendications précédentes, dans lequel le conduit de transition (8) est produit par une technologie de fabrication additive.

10. Chambre de combustion tubulaire (5) pour un ensemble turbine à gaz (1) pour centrale électrique, dans laquelle la chambre de combustion tubulaire (5) comprend au moins un brûleur (9, 11), au moins une chambre de combustion (10, 12) et un conduit de transition (8) pour guider les gaz chauds de la chambre de combustion (10, 12) vers une turbine (3) de l'ensemble turbine à gaz (1) ; dans laquelle le conduit de transition (8) est réalisé selon l'une quelconque des revendications précédentes.

11. Chambre de combustion tubulaire selon la revendication 10, dans laquelle la chambre de combustion tubulaire (5) comprend en série un premier brûleur (9), une chambre de combustion (10), un second brûleur (11), une seconde chambre de combustion (12), le conduit de transition (8) étant relié à la seconde chambre de combustion (12).

12. Turbine à gaz pour centrale électrique ; la turbine à gaz (1) ayant un axe (A) et comprenant :
- un compresseur (2) pour comprimer l'air ambiant,
- un plénum (16) pour recevoir l'air comprimé sortant du compresseur (2),
- une pluralité de chambres de combustion tubulaires (5) pour mélanger et brûler l'air comprimé quittant le plénum (16) avec au moins un combustible,
- une turbine (3) pour détendre le flux de gaz chauds brûlés quittant les chambres de combustion tubulaires (5) et effectuant un travail sur un rotor ;
dans laquelle chaque chambre de combustion tubulaire (5) est réalisée selon l'une quelconque des revendications 10 ou 11 précédentes.
